(19)

Europäisches
Patentamt
European
Patent Office
Office européen
des brevets

(11) **EP 2 722 192 B1**

(12) **EUROPEAN PATENT SPECIFICATION**

(45) Date of publication and mention
of the grant of the patent:
**16.09.2015 Bulletin 2015/38**

(51) Int Cl.:
***G06K 9/00*** *(2006.01)*    ***B42D 25/00*** *(2014.01)*

(21) Application number: **12188964.6**

(22) Date of filing: **18.10.2012**

(54) **Identity card with a physical unclonable function**

Identitätskarte mit einer physikalisch nicht klonbaren Funktion

Carte d'identité pourvue d'une fonction physique inclonable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.04.2014 Bulletin 2014/17**

(73) Proprietor: **Bundesdruckerei GmbH
10969 Berlin (DE)**

(72) Inventors:
• **Kulikovska, Olga
14165 Berlin (DE)**
• **Paeschke, Manfred
16348 Wandlitz (DE)**

• **Fumy, Walter
91052 Erlangen (DE)**
• **Morgner, Frank
15537 Grünheide (DE)**

(74) Representative: **Klinski, Robert
Patentship
Patentanwaltsgesellschaft mbH
Elsenheimerstraße 65
80687 München (DE)**

(56) References cited:
**EP-A1- 0 778 159        WO-A2-2006/056089
WO-A2-2007/087498    DE-A1- 2 838 795
GB-A- 2 304 077         US-A- 4 066 280**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The preset invention relates to identity cards with physical unclonable functions (PUF).

Today, a wide variety of applications - from banking to access control to electronic passports - are based on identity cards, i.e. smart cards. These can be equipped with cryptographic modules and guarantee a high level of security for systems and users. However, designers and manufacturers of smartcards and security ICs are continuously aiming at further enhancing their cards' security.

In order to further improve security of an identity card, Physical Unclonable Functions (PUFs) can be provided. PUFs are functions embodied in physical structures which are easy to evaluate but hard to predict. Furthermore, implementations are difficult to duplicate, even if the exact manufacturing process is known and available. Consequently, security architectures based on PUFs promise inherent unclonability, physical tamper resistance and secure establishment of device-unique cryptographic keys. Well-known bare silicon PUFs aim at ensuring the security of the circuit itself but do not grant tamper resistance to the card in which it is embedded.

The challenge-response behaviour of a PUF is determined by sub-micron physical characteristics formed by manufacturing process variations which are not reproducible, not even by the original manufacturer. PUFs enable the generation of a device-unique secret based on physical properties rather than on binary memory mechanisms such as fuses. During the last decade, several PUF constructions have been proposed and realized as described in Lim, Daihyun and Lee, Jae W. and Gassend, Blaise and Suh, G. Edward and van Dijk, Marten and Devadas, Srinivas, Extracting secret keys from integrated circuits. In IEEE Transactions on Very Large Scale Integration (VLSI) Systems, volume 13, no 10, pages 1200-1205. IEEE, 2005. Further reference is made to Thomas Esbach, Walter Fumy, Olga Kulikovska, Dominik Merli, Dieter Schuster, Frederic Stumpf, "A new security architecture for smartcards utilising PUFs", to be published in "Securing Electronic Business Processes - Highlights of the Information Security Solutions Europe 2012 Conference".

PUFs are usually based on silicon structures and utilize tiny deviations in the electronic circuitry well below the tolerances of fabrication processes. These non-reproducible deviations make the circuitry unique and are often referred to as 'chip fingerprints'.

However, in spite of intensive research, PUF implementations remain few and far between and are rarely considered in the context of high-end security architectures.

The European patent application EP 0 778 159 A1 discloses an identity card according to the preamble of claim 1 comprising a security covering structure for identity documents, and a process for obtaining it. The security covering structure comprises three layers having the same reflecting coefficient.

It is therefore the object of the invention to provide an efficient concept for providing identity cards with a PUF.

This object is achieved by the features of the independent claims. Further embodiments are disclosed in the description, the figures and the figures.

The invention is based on the finding that the above object can be achieved by providing PUF structures with different reflectivities within a card body. Therefore, the intensity of the reflected light can be adapted to e.g. a sensitivity of an optical sensor sensing the reflected light.

According to an aspect, the invention relates to an identity card, comprising a card body and a physical unclonable function arranged within the card body, wherein the physical unclonable function comprises a first arrangement of light reflecting elements being arranged in a first card body area, and a second arrangement of light reflecting elements being arranged in a second card body area, and wherein the first arrangement of light reflecting elements has a higher light reflectivity than the second arrangement of light reflecting elements. The identity card further comprises a light source for emitting light towards the first arrangement of light reflecting elements and the second arrangement of light reflecting elements and an optical sensor for sensing light reflected from the first arrangement of light reflecting elements and the second arrangement of light reflecting elements.

The reflectivity is determined as a fraction of reflected light by the respective arrangement of light reflecting elements. Preferably, all arrangement of light reflecting elements have reflectivities exceeding a predetermined threshold to ensure that some or each arrangement of light reflecting elements can reflect enough light to be sensed on a surface of the card body by the sensor. Thus, the required reflectivities of the arrangements of light reflecting elements can be determined in dependence on a sensitivity or resolution of an optical sensor sensing the reflected light on a surface of the card body or within the card body.

The physical unclonable function is arranged to provide an optical fingerprint of the identity card or a kryptographic key. The card body can be at least partially light transparent and may be composed of one or more plastic layers such as polymer layers, in particular laminated plastic layers.

The arrangement of light reflecting elements can be formed by metal layers respectively comprising a periodic pattern of metal stripes forming a grating. A plurality of such arrangement of light reflecting elements arranged above each other may uniquely diffract and/or refract and/or reflect incident light and thus form a unique fingerprint identifying the identity card. Such arrangement of light reflecting elements can be implemented when manufacturing an identity card, by e.g. embedding the arrangement of light reflecting elements in a plastic, e.g. polymer card body, or by arranging the arrangement of light reflecting elements between transparent laminate layers of the identity card.

An advantage of such physical unclonable function is that it can comprise macroscopically well defined structures with non-random distribution in the card body which simplifies the manufacturing process and can allow optimization of light scattering in terms of sensitivity of the measuring system. At the same time, the uniqueness of each fabricated structure and correspondingly of its optical response can be provided by the smallest tolerances of the fabrication process on the microscopic level and thus is intrinsic to those PUFs.

According to an embodiment, the second arrangement of light reflecting elements is arranged closer to at least one common point on a surface of the card body or within the card body than the first arrangement of light reflecting elements.

According to an embodiment, the identity card comprises only arrangements of light reflecting elements, each having a reflectivity being greater than or equal to a predetermined reflectivity threshold, e.g. 5% or 10% the maximum reflectivity. Accordingly, the second arrangement of light reflecting may have a reflectivity of 100%.

According to an embodiment, the identity card comprises only N arrangements of light reflecting elements, each of the N arrangements of light reflecting elements being arranged in a different card body area at a different distance from a common point on a surface of the card body or within the card body, and wherein a light reflectivity of the arrangements of light reflecting elements increases, in particular linearly or gradually, with increasing distance of the arrangements of light reflecting elements from the common point.

According to an embodiment, the light reflecting elements of the first arrangement of light reflecting elements and of the second arrangement of light reflecting elements are respectively formed by back scattering or reflective particles being arranged to form the respective arrangement of light reflecting elements, or by planar surface elements, in particular stripes or rectangles or circular elements or oval elements, being arranged to form the respective arrangement of light reflecting elements. The planar surface elements can be formed of metal or polymer.

According to an embodiment, a density of the light reflecting elements of the first arrangement of light reflecting elements in the first card body area is greater than a density of the light reflecting elements of the second arrangement of light reflecting elements in the second card body area.

According to an embodiment, the light reflecting elements of the first arrangement of light reflecting elements have bigger reflective surfaces than the light reflecting elements of the second arrangement of light reflecting elements.

According to an embodiment, the intensities of light reflected by the first arrangement of light reflecting elements and the second arrangement of light reflecting elements at a common point on a surface of the card body are identical within an identity range.

According to an embodiment, the light reflecting elements of the respective arrangement of light reflecting elements are statistically or regularly arranged within the respective card body area.

According to an embodiment, the light reflecting elements of the first arrangement of light reflecting elements and of the second arrangement of light reflecting elements respectively form reflective layers.

According to an embodiment, the reflective layers are planar reflective layers arranged at different distances with respect to a surface of the card body, or wherein the reflective layers are arranged along curvatures, in particular spherical curvatures, with different radiuses towards a common center point, the common center point being a common point on a surface of the card body or being above or beneath the surface of the card body or within the card body.

According to an embodiment, the light reflecting elements of the first arrangement of light reflecting elements and the light reflecting elements of the second arrangement of light reflecting elements are respectively arranged to form a periodic pattern, in particular a grating.

According to an embodiment, a difference between the reflectivity of the first arrangement of light reflecting elements and the second arrangement of light reflecting elements is greater than or equal to a predetermined threshold. The predetermined threshold can be e.g. determined by a fraction resulting from dividing 100% by a number of arrangements of light reflecting elements. However, the predetermined threshold can be set to 5% or 10% the reflectivity of the most reflective arrangement of light reflecting elements. Moreover, the threshold can be defined by the light sensitivity or light resolution of an optical sensor which may sense the reflected light.

According to an embodiment, the first arrangement of light reflecting elements and the second arrangement of light reflecting elements jointly form an optical lens.

According to an embodiment, the card body is transparent and wherein the respective card body area forms a layer of the card body, in particular a laminate layer.

According to an embodiment, the identity card further comprises a light source for emitting light towards the first arrangement of light reflecting elements and the second arrangement of light reflecting elements, and an optical sensor for sensing light reflected from the first arrangement of light reflecting elements and the second arrangement of light reflecting elements.

According to an embodiment, the first arrangement of light reflecting elements and the second arrangement of light reflecting elements have light transmittances which are smaller than a light transmittance of the card body. The first arrangement of light reflecting elements and the second arrangement of light reflecting elements can be e.g. refractive layers and/or diffractive layers and/or reflective layers and/or reflective layers and/or at least partially opaque layers. Thereby, an optical fingerprint of the identity card can be obtained.

According to an embodiment, the respective light transmittance layer is an optically linear layer or an optically nonlinear or optically excited layer.

According to an embodiment, the optically linear layer is one of the following layers: a metal layer or a printing ink layer or a nanoparticle layer or a layer having a light refraction index which is different, e.g. greater, than a light refractive index of the card body, or a diffractive layer, wherein the optically nonlinear layer is a nonlinear polymer or photochrome layer, and wherein the optically excited layer is a fluorescent material layer.

According to an embodiment, the first arrangement of light reflecting elements and the second arrangement of light reflecting elements are arranged above each other, e.g. exactly each other within a tolerance, e.g. 1% or 5% or displaced with respect to each other.

According to an embodiment, the first arrangement of light reflecting elements and/or the second arrangement of light reflecting elements comprises spaced surface elements, in particular stripes or rectangles or circular elements or oval elements. The term "surface elements" denotes flat elements having a thickness smaller than e.g. a surface radius or a surface circumference or a surface width or a distance between the layers. The surfaces can be planar surfaces. Unlike particles, the surfaces of the surface elements are formed by surface areas which can be directed towards e.g. a light source arranged on the card body.

According to an embodiment, the first arrangement of light reflecting elements comprises a periodic pattern, in particular a grating, of spaced surface elements having smaller transmittance than the card body, and wherein the second arrangement of light reflecting elements comprises a periodic pattern, in particular a grating, of spaced surface elements having smaller transmittance than the card body.

According to an embodiment, the respective periodic pattern is one-dimensional or two-dimensional. The respective one-dimensional periodic pattern may comprise a plurality of stripes arranged next to each other so as to form a periodic structure. The respective two-dimensional periodic pattern may comprise a plurality of areas periodically arranged so as to form a two-dimensional grid.

According to an embodiment, the first arrangement of light reflecting elements comprises a first periodic pattern of spaced surface elements, wherein the second arrangement of light reflecting elements comprises a second periodic pattern of spaced surface elements, and wherein the first periodic pattern of spaced surface elements and the second periodic pattern of spaced surface elements are arranged above each other. The spacing between the spaced surface elements can have a wavelength-scale dimension.

According to an embodiment, the spaced surface elements of the first arrangement of light reflecting elements and the spaced surface elements of the second arrangement of light reflecting elements are arranged exactly above each other within a tolerance, e.g. 1%, 2% or 5% of a surface width, or wherein the first periodic pattern and the second periodic pattern are displaced with respect to each other.

According to an embodiment, the spaced surface elements of the first arrangement of light reflecting elements have bigger or wider surfaces than the spaced surface elements of the second arrangement of light reflecting elements. Thus, the surface elements of the first arrangement of light reflecting elements may extend over the surface elements of the second arrangement of light reflecting elements.

According to an embodiment, the respective arrangement of light reflecting elements comprises spaced surface elements respectively having a wavelength-scale surface dimensions or thicknesses, or wherein the respective arrangement of light reflecting elements comprises spaced surface elements respectively spaced apart by a wavelength-scale distance, or wherein a distance between the first arrangement of light reflecting elements and the second arrangement of light reflecting elements is of wavelength scale.

According to an embodiment, the card body comprises laminated transparent layers, wherein the first arrangement of light reflecting elements is arranged between successive two laminated transparent layers of the card body, and wherein the second arrangement of light reflecting elements is arranged between successive two laminated transparent layers of the card body.

According to an embodiment, the light source and the optical sensor are arranged on a surface of the card body such that the second transmittance reduction layer is closer to the optical sensor than the first transmittance reduction layer.

According to an embodiment, the identity card comprises an integrated circuit comprising the optical sensor. The integrated circuit may be formed by an ID chip arranged on a surface of the card body.

According to an embodiment, the identity card is an identity document or a smart card or a credit card.

According to an embodiment, the identity card is formed by a transparent polymer. The identity card can have a plurality of laminated polymer layers.

According to a further aspect, the invention relates to a method for manufacturing an identity card, the method comprising arranging a first arrangement of light reflecting elements in a first card body area of a card body and a second arrangement of light reflecting elements in a second card body area of the card body, the first arrangement of light reflecting elements having a higher light reflectivity than the second arrangement of light reflecting elements, the arrangements of light reflecting elements forming a physical unclonable function, providing a light source for emitting light towards the first arrangement of light reflecting elements and the second arrangement of light reflecting elements and providing an optical sensor for sensing light reflected from the first arrangement of light reflecting elements and the second arrangement of light reflecting elements.

Further method steps of the method for generating an identity card are directly derivable from the features of the identity card.

Further embodiments will be described with respect to the accompanying figures, in which:

Fig. 1a, 1b show identity cards with a PUF;

Fig. 2 shows an identity card;

Figs. 3a, 3b show stacks of arrangements of light reflecting elements;

Figs. 4a, 4b show calculated intensities of light;

Fig. 5 shows a schematic diagram of a stack of three arrangements of light reflecting elements;

Fig. 6a, 6b and 6c show shows the arrangement of light reflecting elements; and calculated distributions of light intensity caused by the arrangements; and

Fig. 7 shows a diagram of a method for determining structure parameters.

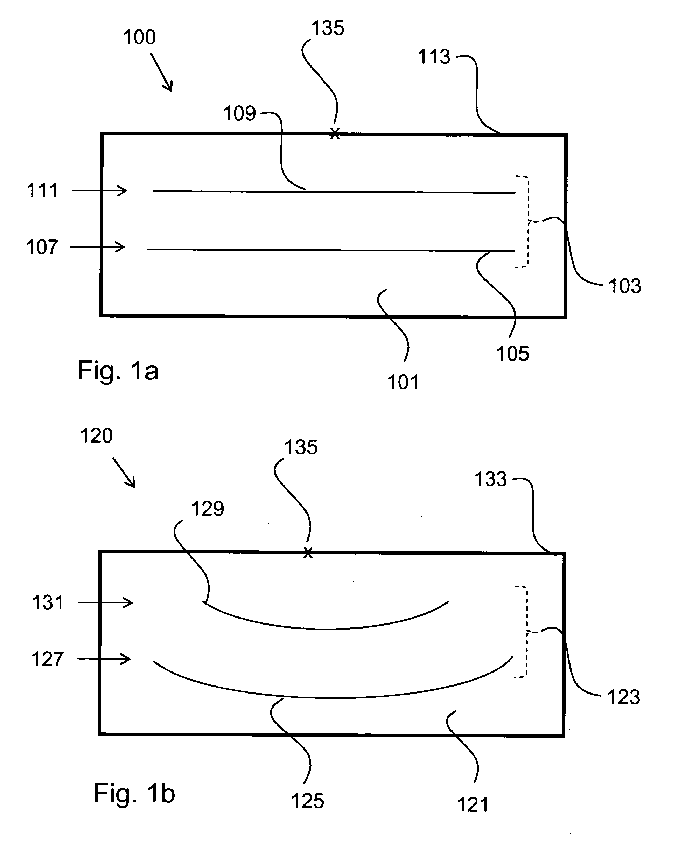

Figs. 1 a and 1 b show identity cards according to some embodiments.

The identity card 100 shown in Fig. 1a comprises a card body 101 with a PUF 103 which is arranged within a card body 101.

The PUF 103 comprises a first arrangement 105 of light reflecting elements being arranged in a first card body area 107, and a second arrangement 109 of light reflecting elements being arranged in a second card body area 111. The first arrangement 105 of light reflecting elements has a higher light reflectivity than the second arrangement 109 of light reflecting elements.

The first arrangement 105 of light reflecting elements and the second arrangement 109 of light reflecting elements can be formed by planar reflective layers extending parallel to a surface 113 of the card body 101 and having surfaces e.g. showing towards the surface 113. Thus, light emitted from the surface 113 can be reflected by the reflective surfaces and measured on the surface 113 e.g. by an optical sensor, which can be arranged on the surface 113.

The layers can be formed by reflective metal layers comprising e.g. metal stripes as light reflecting elements.

Fig. 1b shows an identity card 120 which comprises a card body 121 with a PUF 121 which is arranged within a card body 121.

The PUF 123 comprises a first arrangement 125 of light reflecting elements being arranged in a first card body area 127, and a second arrangement 129 of light reflecting elements being arranged in a second card body area 131. The first arrangement 125 of light reflecting elements has a higher light reflectivity than the second arrangement 129 of light reflecting elements.

The first arrangement 125 of light reflecting elements and the second arrangement 129 of light reflecting elements can be formed by reflective layers which are arranged along curvatures, in particular spherical curvatures, with different radiuses towards a common center point, a common center point 135 being a common point on a surface of the card body or being above or beneath the surface of the card body. The layers can be formed by reflective metal layers comprising e.g. metal stripes as light reflecting elements.

According to some embodiments, a device-unique material structure forming the PUF as e.g. key storage or optical fingerprint can be used which can have multiple advantages. One of them is the physical and logical connection between chip and card body. Furthermore, invasive manipulations would probably change or destroy the material and thereby render the embedded secret useless.

For the scenario of an identity card of a smartcard, the choice of an optical PUF is favourable. Optical measurements are robust against Electro-Magnetic Interference (EMI) and in addition not only enable the use of the card body as the physical structure to be measured, but also provide the possibility of involving the printing on the card. However, resource constraints in smartcards, e. g. limited power consumption as well as static placement of the optical measurement mechanisms, do not allow the integration of optical PUFs based on laser beams.

In general, the challenge-response behaviour of the PUF 101 can be complex in order to resist model-building attacks and to provide enough entropy for the desired applications.

According to some embodiments, the PUF 101, 121 is integrated in order to protect against modelling attacks and ensure secure usage of the PUF 101, 121 e. g. for key embedding and reconstruction. According to some embodiments, not only does the material enclosure protect the inner circuits, but the control circuits also protect the system from read-out or other methods of unauthorized access to the core of the PUF 101, 121 which could enable modelling attacks.

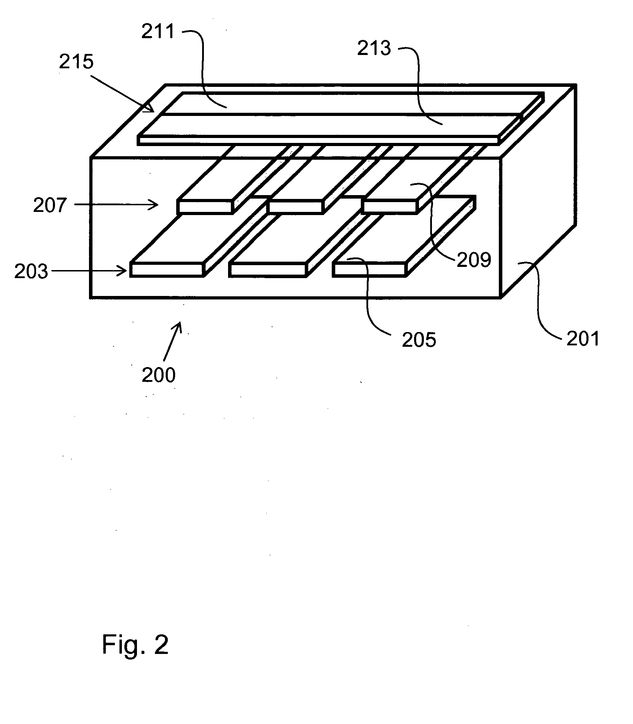

Fig. 2 shows an identity card 200, comprising a card body 201 and a physical unclonable function 203, 207 arranged within the card body 201, wherein the physical unclonable function comprises a first arrangement of light reflecting elements 203 and a second arrangement of light reflecting elements 207.

The first arrangement of light reflecting elements 203 comprises spaced surface elements 205, e.g. metal stripes, being arranged to form a one dimensional periodic pattern (grating). Accordingly, the second arrangement of light reflecting elements 207 comprises spaced surface elements 209, e.g. metal stripes, being arranged to form a one dimensional periodic pattern (grating). The first arrangement of light reflecting elements 203 and the second arrangement of light reflecting elements 207 are arranged above each other within the card body 201, which is more transparent than the spaced surface elements 205, 209. The card body 201 can be formed from at least partially transparent polymer.

The surface elements 205, 209 can have dedicated surfaces being directed towards the optional light source 211 arranged on top of the card body 201. The light source 211 may comprise e.g. a LED or a LED array. Thus, the surfaces of the surface elements 205, 209 form reflective layers reflecting light emitted by the light source 211 towards the surface elements 205, 209.

The identity card can further comprise a sensor 213 for sensing light from the surface elements 205, 209 in response to the light emitted by the light source 211.

The light source 211 and the sensor can be integrated within an integrated circuit 215,

The first arrangement of light reflecting elements 203 and the second arrangement of light reflecting elements 207 collectively form the PUF as a probed physical structure arranged in a probed volume $V_p$.

The maximum amount of information that can be extracted from a PUF increases with the space that can be measured e.g. by the chip, i.e. the integrated circuit 215. The card area that can be accessed by the measurement is the probed volume $V_p$.

According to some embodiments, the size of the probed area is defined on the one hand by chip specifications - such as measurement sensitivity and relative positions of light sources and sensors - and on the other hand by the scattering properties of the card materials. The optical properties can be optimized in terms of both the sensitivity of the sensors and the desired penetration depth. A parameter which can be considered is the back-scattering of light, since the sensors on the chip measure only the light that is reflected or scattered back to the integrated circuit 215. This can be demonstrated using the one-dimensional model structure consisting of $N$ equal partially reflective layers, each with reflection $R$.

$$r_n = r_{n+1} = R \tag{1}$$

Intensities of light emitted and reflected by a single layer n are given by formula $I_{tn} = (1-R)I_{t(n-1)}$ and $I_{rn} = RI_{t(n-1)}$ respectively, where $I_{t(n-1)}$ is intensity of light emitted by the previous layer. The total intensity of light reflected by the stack of $k$ layers is given by formula

$$I_{rk} = \sum_{n=1}^{k} I_{rn} \ .$$

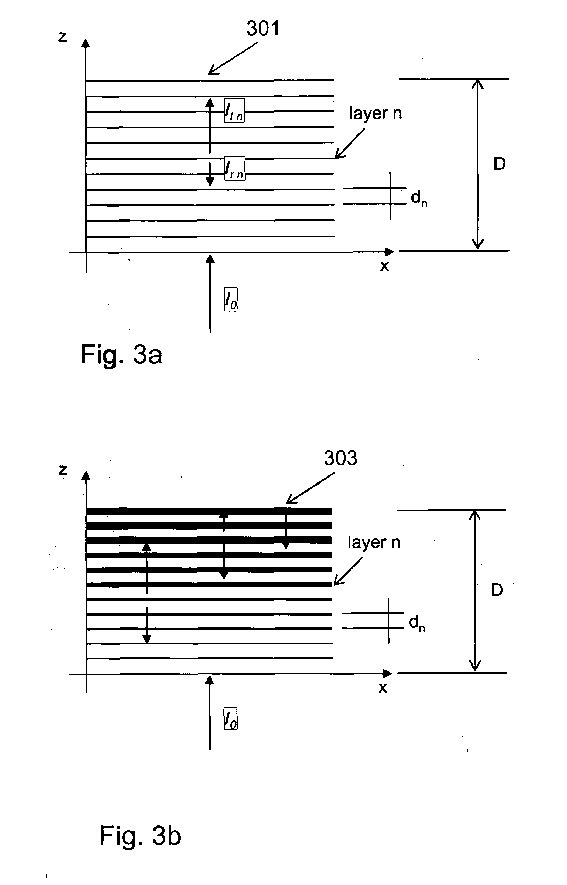

Fig. 3a shows a stack of k (k∈{1...N}) arrangements of light reflecting elements 301 collectively forming a PUF and being arranged in a volume having a thickness D. A space between subsequent arrangements of light reflecting elements 301 is denoted by $d_n$. The arrangement of light reflecting elements 301 may be reflective layers respectively comprising a grating of surface elements such as metal stripes.

Fig. 3b shows a stack of k (k∈{1...N}) arrangement of light reflecting elements 303 collectively forming a PUF. According to some embodiments, the reflectivities of the arrangements of light reflecting elements 301 increase with increasing distance from a surface of a card body or from a plane in a card body, i.e. with increasing z along the z-axis. This is depicted in Fig. 3a with increasing thicknesses of the horizontal lines representing the respective arrangement of light reflecting elements 301. The light with the Intensity $I_0$ is transmitted towards the arrangements of light reflecting elements 301 from a surface of a card body, which is not depicted in Fig. 3b.

In the following, a layer n in the stack of layers {1,2, ...n...N} will exemplarily be considered, wherein the layer 1 is assumed to be closest one to the incidence plane. Each layer is defined by its reflection coefficient $r_n$ and transmission coefficient $t_n$

The intensity $I_{0n}$ is incident on the layer n. Then the reflected intensity $I_{rn}$ is given by $I_{rn} = I_{0n}r_n$ and the transmitted intensity by $I_{th}$ $I_{tn} = I_{0n}t_n = I_{0n}(1-r_n)$

Sensor signal caused by a single layer n is given by $\Delta I_n = I_{rn} = I_{0n}{}^r n$

For calculation of layer properties, the following can be assumed:

- A signal from a single layer can be measured by the sensor only if it exceeds the sensor sensitivity S: $\Delta I_n \geq S$
- The dynamic range of the sensor is used most efficiently if the signal from a single layer is equal to the sensor sensitivity S: $\Delta I_n = S$ and $\Delta I_1 = \Delta I_2 = ... \Delta I_n = ...\Delta I_N = S$

For the sake of simplicity, multiple reflections by layers are neglected, and only one reflection on each layer will be considered without loss of generality.

Incidence intensity on layer n is $I_{0n} = I_{0(n-1)}(1-r_n)$, with signal caused (reflected) by layer n: $\Delta I_n = I_{on}r_n = I_{0(n-1)}(1-r_n)r_n$. A signal caused by layer (n-1) is $\Delta I_{n-1} = I_{0(n-1)}r_{n-1}$, and signals from all layers should be equal: $\Delta I_{n-1} = \Delta I_n$, so that $I_{0(n-1)}r_{n-1} = I_{0n}r_n$

$$\frac{r_n}{r_{n-1}} = \frac{I_{0(n-1)}}{I_{0n}}$$

$$r_n = \frac{r_{n-1}}{1-r_{n-1}} \quad \text{- is the reflection coefficient of layer n} \tag{2}$$

If the reflection coefficients of layers {1, 2, ...n...N} are defined by the formula (2), each layer will reflect the same light intensity and thus cause the same signal of the sensor.

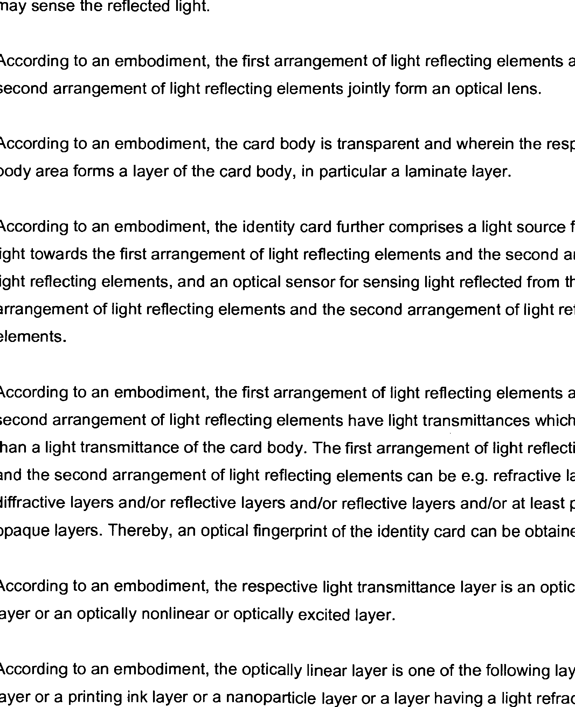

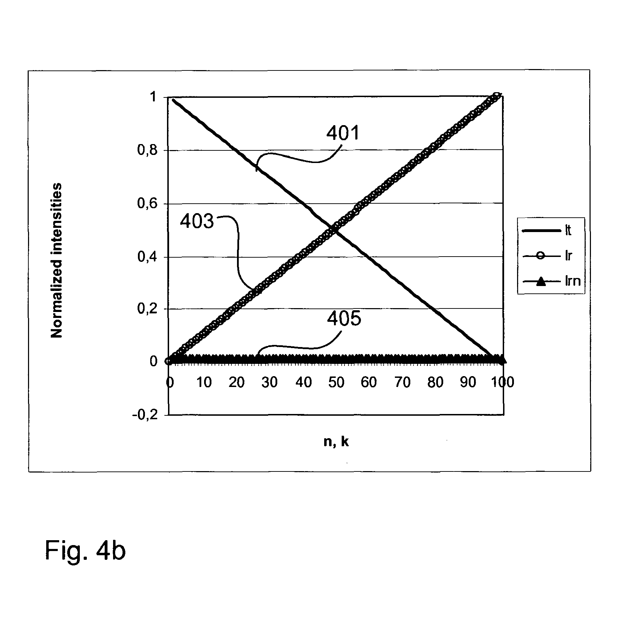

Fig. 4a and 4b depict the intensities of light emitted and reflected by the stack of k (k∈{1...N}) arrangements of light reflecting elements 301 as well as the intensity of light reflected by a single layer n. In particular, normalized intensities of light transmitted 401 (solid line), reflected 403 by the stack of *k* layers (circles) and reflected 405 by a single layer *n* (triangles) calculated corresponding to the formula (1) and (2) are shown in Fig. 4a and Fig. 4b relatively.

The contribution from a single layer decreases with the layer number n. For example, if a single layer reflects 10% of light (R=10%), the maximum contribution from a single layer to the signal does not exceed 10% and the contribution from the 24th layer becomes smaller than 1%. The contribution from the remaining N-24 layers does not exceed 8% of the total signal. This model clearly shows the relation between sensitivity of sensor, material structure and the maximum size of the probed physical structure. In the embodiment shown in Fig. 4a, layer n from {1, 2, ...n...N} has the same reflection coefficient $r_n = 0,1$.

As shown in Fig. 4b, each layer n from {1, 2, ... n...N} has a different reflection coefficient calculated corresponding to formula (2). The layer n=1 reflects 1% of incident light and the layer N=100 reflects 100% of incident light.

In the case of a stack of the equally reflecting layers shown in Fig. 4a, the signal from the layer n=25 becomes smaller than 1 % of incident intensity. Thus a stack of maximum 25 layers can be used with sensor having sensitivity of 0,01.

In the case of a layer stack with gradual distribution of reflection as shown in Fig. 4b, the signals from all layers are equal and amounts 1 % of incident intensity. A sensor with sensitivity of 0,01 can detect the signals from a stack of 100 layers.

In this way the stack of layer can be optimized in order to provide the higher detected volume of the material and thus the higher information content of the PUF.

The approach can be applied to any light scattering layers or media by taking into account the related light scattering processes.

The maximum amount of information that can be obtained from a probed area with an optical PUF can be roughly estimated, assuming that the smallest material structure that can be resolved by optical measurement has a size comparable to the wavelength $\lambda$ of the probing light. The probed volume $V_p$ can be divided into $N_e$ elementary volumes $\lambda^3$. In the simplest case, each elementary volume represents 1 bit of information and the maximum amount of information is given by the number of elementary volumes $N_e = V_p / \lambda^3$.

For example, from a volume $V_p$ of size 1.0x1.0x0.3 $mm^3$ probed by a wavelength of 700 nm, one can extract a maximum of $8.7 \times 10^5$ bits.

With regard to light propagation and in order to describe the properties of light distribution at the exit surface of the medium, the influence of fabrication tolerances on the resulting light distribution and in order to relate the optimum medium structure and size to the integrated measuring means, the theoretical light propagation in the designed media can be calculated.

The calculation approach can, by way of example, be based on elementary structures. A disordered structure is mathematically resolved into a finite series of elementary periodical structures. Light propagation in such structures can be numerically calculated in a volume compared to the probed volume $V_p$. Any single parameter of the structure, like the number of layers, period, contrast or spatial shift, can be independently varied and the resulting change in light distribution can be calculated.

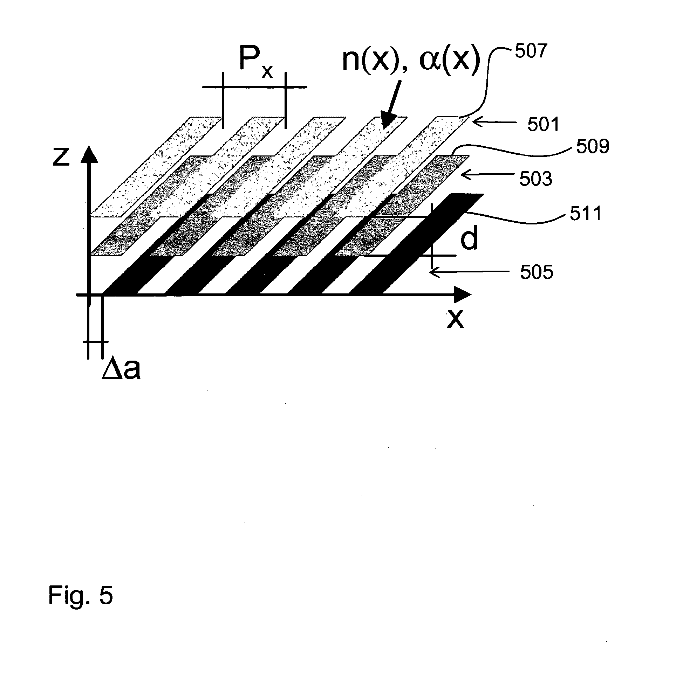

Fig. 5 shows a schematic diagram of a stack of three arrangement of light reflecting elements 501, 503, 505, respectively comprising spaced surface elements 507, 509, 511, e.g. metal stripes forming light reflecting elements, being arranged to form a periodic pattern (grating). The grating can be characterized by modulated refraction and absorption n(x), $\Delta$(x), period $P_x$, layer distance d and a relative layer shift $\Delta$a.

The arrangement of light reflecting elements 501, 503, 505, are arranged above each other, with or without a displacement in x direction. Furthermore, the surfaces of the spaced surface elements 507, 509, 511 can be aligned to show in the same direction, i.e. having normal showing in the z-direction and/or can be inclined with normal showing in the z-x-direction.

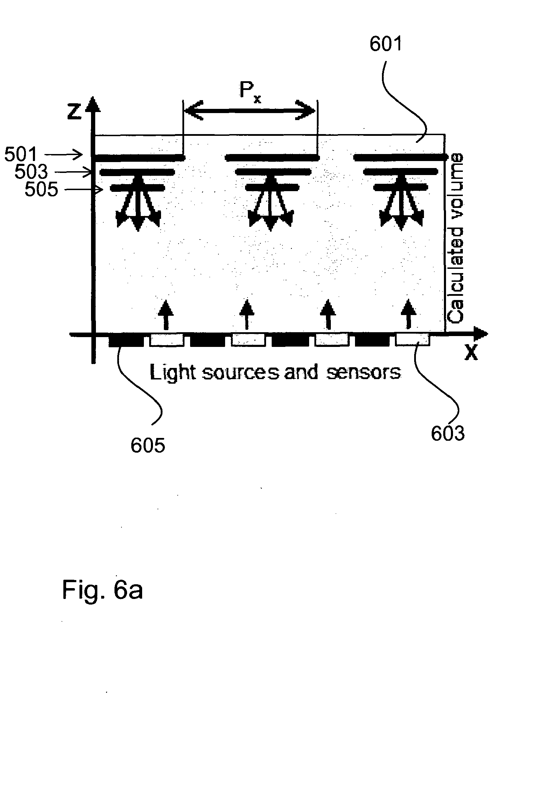

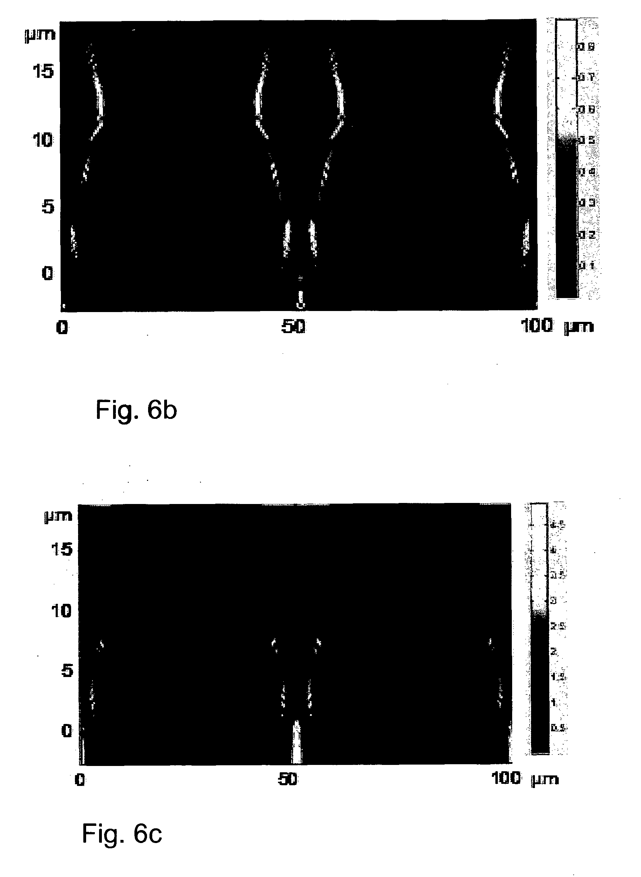

Fig. 6a shows the arrangement of light reflecting elements 501, 503, 505 shown in Fig. 5, which are arranged within a transparent card body 601 of an identity card 600. The identity card further comprises a plurality of light sources 603 and a plurality of light sensors 605. Figs. 6b and 6c show corresponding light distributions obtained for reflective layer thicknesses of 10 nm, Fig. 6b, and 20 nm, Fig. 6c.

The arrangements of light reflecting elements 501, 503, 505 can respectively comprise spaced surface elements being formed by thin (compared to to the width) metal stripes embedded in a transparent polymer material forming the card body 601. The metal stripes can have different, e.g. staggered, widths as shown in Fig. 6a. The cross section of the structure is shown schematically in Fig 6a. The period $P_x$ between subsequent spaced surface elements can set to 50 $\mu$m (wavelength-scale), and the distance between the arrangement of light reflecting elements 501, 503, 505 to about 100 nm (wavelength-scale).

The thickness of the arrangement of light reflecting elements 501, 503, 505 can be varied between 10 and 30 nm or even 300 nm. The volume can be illuminated with parallel light of a wavelength of 630 nm under normal incidence.

The graphs of Figs. 6b and 6c show the resulting spatial distributions of light intensity normalized to the intensity of incident light. There is a difference in the light distribution for the different metal layer thicknesses of 10 and 30 nm. The latter results in a focussed light thus in even a further improved contrast of the light pattern. Furthermore, the light is redistributed by the structure in the entire calculated volume while the distribution changes with distance from the structure. The light achieves higher contrast at some distance, while in the area close to the structure the contrast and the characteristic size of the light spots remain smaller. The results show how the light distribution is affected by a 20 nm difference in layer thickness.

In the following, the material selection for the arrangement of light reflecting elements will be addressed.

The arrangement of light reflecting elements can have a different light characteristic, e.g. transmittance, then the card body surrounding the arrangement of light reflecting elements. According to some embodiments, the arrangement of light reflecting elements can be structured using known card production techniques, including printing, spraying, dispersing, embossing or vacuum deposition techniques as well as holographic recording.

Most optical materials do not interact with light, thus providing simultaneous and linear response. The signal from a PUF based on such materials is measured by a sensor at the same moment as the light is emitted by a light source and its value is proportional to the intensity of the probe light.

Under the assumption that sensors integrate light over time $t_m$, the type of suitable materials can be extended by material that can interact with light within time $< t_m$. Optically non-linear materials change their optical properties under irradiation. This change is strongly dependent on the light intensity, is induced within a very short time and relaxes after the light is switched off. Fluorescent materials absorb light in one spectral region and emit it in another, usually red-shifted, spectral region. Emission follows absorption within a very short time and depends strongly on the molecular surroundings of the emitting units. Typical emission times are within the range of 0.5 to 20 ns.

Of particular interest are time-resolved or time-delayed measurements, where the response is measured with some delay relative to the probe light flash. An approach of this kind only makes sense if the material response changes reversibly during or after irradiation. Photochromic materials are examples of such materials. Under irradiation with actinic light, the photochromic unit undergoes a transformation to its other form, which has a different absorption spectrum. Relaxation to the initial form occurs thermally or under irradiation. The most effective photochromic materials are stilbenes, spiropyranes, azobenzenes as well as bacteriorhodopsin.

The material types and their related properties are summarized in Table 1.

**Table 1:** Material overview and properties

| Material types | Related properties |
|---|---|
| Optically linear:<br><br>printing inks, metallic inks, dispersed micro and nano-particles, materials with high refractive indices | Simultaneous response:<br><br>response depends on light intensity; broadband absorption spectra; probing with different wavelengths is desirable in order to increase variation of PUF response. |
| Optically nonlinear:<br><br>variety of nonlinear polymers, bacteriorhodopsin | Simultaneous response:<br><br>response changes with time, but the response time is very short (shorter than measurement time); response depends on light intensity; nonlinear effects require very high light intensities or electrical fields. |

Regarding the light generation and measurement, the integration of light sources and sensors into the security chip (integrated circuit) that is embedded in the identity card can be performed.

According to some embodiments, a PUF model can be provided which takes into account the limitations of available volume, light intensity and resolution or sensitivity of a light sensor for sensing the reflected light. The PUF model can be used for manufacturing an identity card with the modelled PUF structure.

According to some embodiments, the PUF has non-homogeneously distributed scattering or reflection centres or parameters. Such structures enable optimization of a PUF volume.

In order to determine the PUF structure, a simplified model can be used according to some embodiments. In a first step, the card volume or any medium can be presented as a stack of basic layers which enable a simple comparison of optical characteristics between layers. Upon the basis of the basic layers, a maximal senseable volume, a maximum number of layers and a maximum optical density of the respective layer can be determined. The PUF arrangements can thereafter be defined such that the reflected light intensities of light reflected by the respective arrangement are equal within a tolerance, say 1%, 2% or 5%. This enables to determine an optimum volume for embedding the PUF.

Therefore, unnecessary layers which cannot be sensed by optical sensors can be avoided. Further, the PUF volume can be adapted to the volume of the card body. This approach can also be used for statistical PUF arrangements.

The identity card comprises at least one light source and at least one sensor, which can be integrated in the card body.

The card body can be subdivided into layers forming PUF arrangements. Each layer reflects a fraction, e.g. the same fraction, of incident, i.e. transmitted light. Therefore, the reflected light intensity measurable on a surface of the card body can decrease with increasing distance of the respective layer to the surface of the card body. Therefore, the N layers forming N arrangements of the PUF generate refeleced light with different intensities at the optical sensor, sothat the N layers are differently represented in the total reflected light sensed at the durface of the card body.

In order t o achieve that the measurable intensities of reflected light by each arrangement are the same within a tolerance, e.g. 2% or 5%, the reflectivities of different arrangements are different and can increase with increasing distance from the surface of the card body.

According to some embodiments, an optical sensor can have a measurement range extending between minimal measured signal O and a maximal measured signal A. A minimum resolvable signal difference or signal change is denoted by S. Thus, the maximum number of resolvable signals is $p=(A-O)/S$.

Each arrangement reflects a fraction of the incident light denoted by $Ir_n$ and transmits a fraction denoted by $It_n$.

In order to ensure that the reflected light intensity $Ir_n$ can be measured by the sensor, the following conditions can be satisfied:

$$O \leq \sum_{n=1}^{N} Ir_n \leq A \quad \text{and} \quad Ir_n \geq S$$

The difference or the change of the total signal caused by one damaged or omitted arrangement can be used to obtain $\Delta I_n = Ir_n \rightarrow S$.

Thus, a maximum number of arrangements is $N \rightarrow p$, or $N \leq p$ for signals $\geq S$.

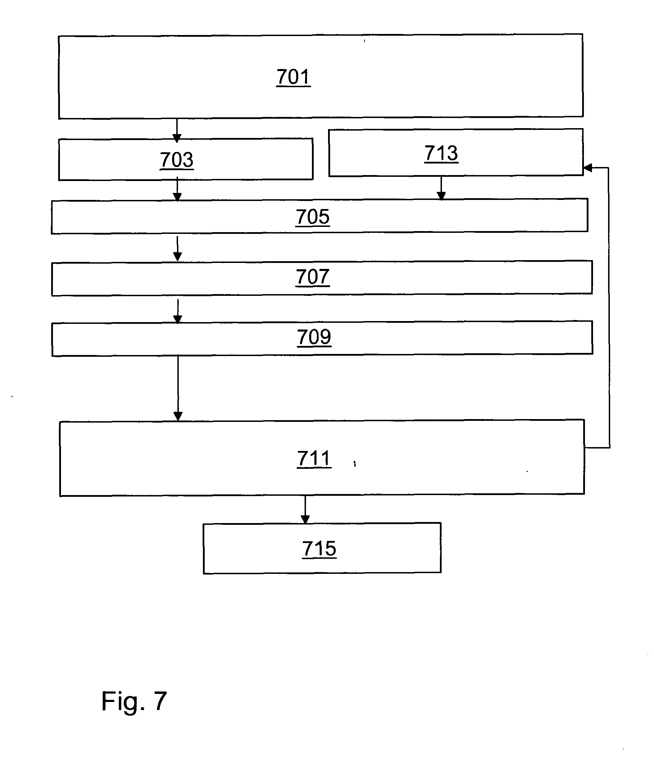

Fig. 7 shows a diagram of a method for determining structure parameters according to an embodiment.

The method comprises the step 701 for defining output parameters such as available light intensity $I_0$ in a relevant spectral area, sensor sensitivity S, minimum and maximum measurable signal values O and A, geometrical configuration such as transmittive or reflective devise geometry, distances and light incidence angles.

In step 703, the optimum signal $\Delta I \geq S$ from an arrangement is determined.

In step 705, a maximum number N of arrangements is determined such that N=(A-O)/S.

In step 707, the thicknesses d, D and the layers number N with d=D/N can be determined, see also Figs. 3a and 3b.

In step 709, optical parameters of the arrangements such as reflectivity $r_n$ can be determined, such that the measurable intensities of light reflected by the respective arrangement are equal within a tolerance, e.g. 2% or 5%, i.e. $I_1=I_2=....=I_n=-.. =I_N$.

In step 711, parameter verification can be performed in terms of possibilities and limits of fabrication processes to e.g. determine whether a minimum reflectivity $r_M$ and corresponding a minimum reflected signal M that can be reached by the applied fabrication method and used materials fulfill $M \geq S$ and/or $r_M \geq \{r_1, r_2, ...r_N\}$. If the verification fails, then the method continues with optional step 713, where a target smallest signal S from one arrangement can be corrected by setting S=M.

Otherwise, structure parameter such as reflectivities are outputted in step 713.

The structure parameters can be used for manufacturing the identity card with arranging a first arrangement of light reflecting elements in a first card body area of a card body and a second arrangement of light reflecting elements in a second card body area of the card body, the first arrangement of light reflecting elements having a higher light reflectivity than the second arrangement of light reflecting elements, preferential calculated corresponding to the related light scattering processes, e.g. to formula (2), the arrangements of light reflecting elements forming a physical unclonable function.

According to some embodiments, the identity card is intended to be operated in contactless mode, which means that only limited power is available for the operation of sensors and light sources.

Regarding the light source, Light Emitting Diodes (LEDs) can be used as light sources since they can be fabricated using CMOS technology and therefore can be easily integrated on a security IC according to an embodiment.

According to some embodiments, the structure of the PUF can be used for generating an encryption key, wherein authentication by a challenge-response protocol directly using the unique mapping of challenges to responses of a PUF can be provided.

According to some embodiments, material-based PUFs can be used where the measurement circuitry is integrated into the smartcard controller and the PUF structure is part of the card material surrounding the chip. Such PUF system is considered resistant against laser fault injection attacks and micro probing, since any physical change results in different measurement data and therefore in altered PUF responses.

**Claims**

1. Identity card, comprising:

   a card body (101, 121 );
   a physical unclonable function (103, 123) arranged within the card body (101, 121), wherein the physical unclonable function (103, 123) comprises a first arrangement of light reflecting elements (105, 125) being arranged in a first card body area (107, 127), and a second arrangement of light reflecting elements (109, 129) being arranged in a second card body area (111, 131), and wherein the first arrangement of light reflecting elements (105, 125) has a higher light reflectivity than the second arrangement of light reflecting elements (109, 129);
   **characterised in that** the identity card further comprises :

   a light source (211) for emitting light towards the first arrangement of light reflecting elements (105, 125) and the second arrangement of light reflecting elements (109, 129); and
   an optical sensor (213) for sensing light reflected from the first arrangement of light reflecting elements (105, 125) and the second arrangement of light reflecting elements (109, 129).

2. The identity card of claim 1, wherein the second arrangement of light reflecting elements (109, 129) is arranged closer to at least one common point (135) on a surface (113, 133) of the card body (101, 121) or within the card body (101, 121)than the first arrangement of light reflecting elements (105, 125).

3. The identity card of claim 1 or 2, comprising only N arrangements (103, 123) of light reflecting elements, each of the N arrangements (103, 123) of light reflecting elements being arranged in a different card body area at a different distance from a common point (135) on a surface (113, 133) of the card body (101, 121) or in the card body (101, 121), and wherein a light reflectivity of the arrangements (103, 123) of light reflecting elements increases, in particular linearly or gradually, with increasing distance of the arrangements (103, 123) of light reflecting elements from the common point (133).

4. The identity card of any of the preceding claims, wherein the light reflecting elements of the respective arrangement (105, 109, 125, 129) of light reflecting elements are respectively formed by back scattering or reflective particles being arranged to form the respective arrangement of light reflecting elements (105, 109, 125, 129), or by planar surface elements, in particular stripes or rectangles or circular elements or oval elements, being arranged to form the respective arrangement of light reflecting elements (105, 109, 125, 129).

5. The identity card of any of the preceding claims, wherein a spatial density of the light reflecting elements of the first arrangement (105, 125) of light reflecting elements in the first card body area (107, 127) is greater than a density of the light reflecting elements of the second arrangement (109,129) of light reflecting elements in the second card body area (111, 131).

6. The identity card of any of the preceding claims, wherein the light reflecting elements of the first arrangement (105, 125) of light reflecting elements have bigger reflective surfaces than the light reflecting elements of the second arrangement (109,129) of light reflecting elements.

7. The identity card of any of the preceding claims, wherein the intensities of light reflected by the first arrangement (105, 125) of light reflecting elements and the second arrangement (109,129) of light reflecting elements at a common point on a surface of the card body are identical within an identity range.

8. The identity card of any of the preceding claims, wherein the light reflecting elements of the respective arrangement (105, 109, 125, 129) of light reflecting elements are statistically or regularly arranged within the respective card body area.

9. The identity card of any of the preceding claims, wherein the light reflecting elements of the first (105, 125) arrangement of light reflecting elements and of the second arrangement (109,129) of light reflecting elements respectively form reflective layers.

10. The identity card of claim 9, wherein the reflective layers are planar reflective layers arranged at different distances with respect to a surface of the card body, or wherein the reflective layers are arranged along curvatures, in particular spherical curvatures, with different radiuses towards a common center point, the common center point being a common point (133) on a surface of the card body (113, 133) or being above or beneath the surface of the card body or within the card body (101, 121).

11. The identity card of any of the preceding claims, wherein the light reflecting elements of the respective arrangement of light reflecting elements (105, 109, 125, 129) are respectively arranged to form a periodic pattern, in particular a grating.

12. The identity card of any of the preceding claims, wherein a difference between the reflectivity of the first arrangement of light reflecting elements (105, 125) and the second arrangement (109, 129) of light reflecting elements is greater than or equal to a predetermined threshold.

13. The identity card of any of the preceding claims, wherein the card body (101, 121) is transparent and wherein the respective card body area forms a layer of the card body, in particular a laminate layer.

14. Method for manufacturing an identity card, the method comprising:

arranging a first arrangement of light reflecting elements in a first card body area of a card body and a second arrangement of light reflecting elements in a second card body area of the card body, the first arrangement of light reflecting elements having a higher light reflectivity than the second arrangement of light reflecting elements, the arrangements of light reflecting elements forming a physical unclonable function, providing the identity card with a light source for emitting light towards the first arrangement of light reflecting elements and the second arrangement of light reflecting elements, and providing the identity card with an optical sensor for sensing light reflected from the first arrangement of light reflecting elements and the second arrangement of light reflecting elements in the card body.

**Patentansprüche**

1. Identitätskarte, umfassend:

   einen Kartenkörper(101, 121);
   eine physikalisch nicht nachahmbare Funktion (103, 123), welche innerhalb des Kartenkörpers (101, 121) angeordnet ist, wobei die physikalischen nicht nachahmbare Funktion (103, 123) eine erste Anordnung von Licht-reflektierenden Elementen (105, 125), welche in einem ersten Kartenkörperbereich (107, 127) angeordnet sind, und eine zweite Anordnung von Licht-reflektierenden Elementen (109, 129), welche in einem zweiten Kartenkörperbereich (111, 131) angeordnet sind, umfasst, und wobei die erste Anordnung von Licht-reflektierenden Elementen (105, 125) eine höhere Lichtreflexivität als die zweite Anordnung von Licht-reflektierenden Elementen (109, 129) aufweist, **dadurch gekennzeichnet, dass** die Identitätskarte ferner umfasst:

   eine Lichtquelle (211) zum Emittieren von Licht auf die erste Anordnung von Licht-reflektierenden Elementen (105, 125) und die zweite Anordnung von Licht-reflektierenden Elementen (109, 129); und
   einen optischen Sensor (213) zum Erfassen von Licht, welches von der ersten Anordnung von Licht-reflektierenden Elementen (105, 125) und der zweiten Anordnung von Licht-reflektierenden Elementen (109, 129) reflektiert wird.

2. Identitätskarte nach Anspruch 1, wobei die zweite Anordnung von Licht-reflektierenden Elementen (109, 129) näher an zumindest einem gemeinsamen Punkt (135) auf einer Oberfläche (113, 133) des Kartenkörpers (101, 121) oder innerhalb des Kartenkörpers (101, 121) als die erste Anordnung von Licht-reflektierenden Elementen (105, 125) angeordnet ist.

3. Identitätskarte nach Anspruch 1 oder 2, lediglich umfassend N Anordnungen (103, 123) von Licht-reflektierenden Elementen, wobei jede der N Anordnungen (103, 123) von Licht-reflektierenden Elementen in einem unterschiedlichen Kartenkörperbereich in einer unterschiedlichen Entfernung von einem gemeinsamen Punkt (135) an einer Oberfläche (113, 133) des Kartenkörpers (101, 121) oder in dem Kartenkörper (101, 121) angeordnet ist, und wobei sich eine Lichtreflexivität der Anordnungen (103, 123) von Licht-reflektierenden Elementen mit zunehmendem Abstand der Anordnungen (103, 123) der Licht-reflektierenden Elemente von dem gemeinsamen Punkt (133), insbesondere linear oder schrittweise, erhöht.

4. Identitätskarte nach einem der vorangehenden Ansprüche, wobei die Licht-reflektierenden Elemente der entsprechenden Anordnung (105, 109, 125, 129) von Licht-reflektierenden Elementen jeweils durch Rückstreuung oder reflektierende Partikel, welche angeordnet sind, um die entsprechende Anordnung von Licht-reflektierenden Elementen (105, 109, 125, 129) zu bilden, oder durch ebene Oberflächenelemente, insbesondere Streifen oder rechteckige oder kreisförmige Elemente oder ovale Elemente gebildet sind, welche angeordnet sind um die entsprechende Anordnung von Licht-reflektierenden Elementen (105, 109, 125, 129) zu bilden.

5. Identitätskarte nach einem der vorangehenden Ansprüche, wobei eine räumliche Dichte der Licht-reflektierenden Elemente der ersten Anordnung (105, 125) von Licht-reflektierenden Elementen in dem ersten Kartenkörperbereich (107, 127) größer als eine Dichte der Licht-reflektierenden Elemente der zweiten Anordnung (109, 129) von Licht-reflektierenden Elementen in dem zweiten Kartenkörperbereich (111, 131) ist.

6. Identitätskarte nach einem der vorangehenden Ansprüche, wobei die Licht-reflektierenden Elemente der ersten Anordnung (105, 125) von Licht-reflektierenden Elementen größere reflektierende Oberflächen als die Licht-reflektierenden Elemente der zweiten Anordnung (109, 129) von Licht-reflektierenden Elementen haben.

7. Identitätskarte nach einem der vorangehenden Ansprüche, wobei die Intensitäten des Lichts, welches durch die erste Anordnung (105, 125) von Licht-reflektierenden Elementen und die zweite Anordnung (109, 129) von Licht-reflektierenden Elementen auf einen gemeinsamen Punkt auf einer Oberfläche des Kartenkörpers reflektiert werden, innerhalb eines Identitätsbereichs identisch sind.

8. Identitätskarte nach einem der vorangehenden Ansprüche, wobei die Licht-reflektierenden Elemente der entsprechenden Anordnung (105, 109, 125, 129) von Licht-reflektierenden Elementen innerhalb des entsprechenden Kartenkörperbereichs statistisch oder regelmäßig angeordnet sind.

9. Identitätskarte nach einem der vorangehenden Ansprüche, wobei die Licht-reflektierenden Elemente der ersten (105, 125) Anordnung von Licht-reflektierenden Elementen und der zweiten Anordnung (109, 129) von Licht-reflektierenden Elementen jeweils reflektierende Schichten bilden.

10. Identitätskarte nach Anspruch 9, wobei die reflektierenden Schichten ebene reflektierende Schichten sind, welche in unterschiedlichen Abständen in Bezug auf eine Oberfläche des Kartenkörpers angeordnet sind, oder wobei die reflektierenden Schichten entlang von Krümmungen, insbesondere sphärischen Krümmungen, mit unterschiedlichen Radien auf einen gemeinsamen Zentralpunkt hin angeordnet sind, wobei der gemeinsame Zentralpunkt ein gemeinsamer Punkt (133) auf einer Oberfläche des Kartenkörpers (113, 133) ist oder oberhalb oder unterhalb der Oberfläche des Kartenkörpers oder innerhalb des Kartenkörpers (101, 121) angeordnet ist.

11. Identitätskarte nach einem der vorangehenden Ansprüche, wobei die Licht-reflektierenden Elemente der entsprechenden Anordnung von Licht-reflektierenden Elementen (105, 109, 125, 129) jeweils angeordnet sind, um ein periodisches Muster, insbesondere ein Gitter, zu bilden.

12. Identitätskarte nach einem der vorangehenden Ansprüche, wobei ein Unterschied zwischen der Reflexivität der ersten Anordnung von Licht-reflektierenden Elementen (105, 125) und der zweiten Anordnung (109, 129) von Licht-reflektierenden Elementen größer oder gleich als ein vorgegebener Schwellenwert ist.

13. Identitätskarte nach einem der vorangehenden Ansprüche, wobei der Kartenkörper (101, 121) transparent ist und wobei der entsprechende Kartenkörperbereich eine Schicht auf dem Kartenkörper bildet, insbesondere eine Laminatschicht.

14. Verfahren zum Herstellen einer Identitätskarte, wobei das Verfahren umfasst:

Anordnen einer ersten Anordnung von Licht-reflektierenden Elementen in einem ersten Kartenkörperbereich eines Kartenkörpers und einer zweiten Anordnung von Licht-reflektierenden Elementen in einem zweiten Kartenkörperbereich des Kartenkörpers, wobei die erste Anordnung von Licht-reflektierenden Elementen eine höhere Lichtreflexivität als die zweite Anordnung von Licht-reflektierenden Elementen hat, wobei die Anordnungen von Licht-reflektierenden Elementen eine physikalisch nicht nachahmbare Funktion bilden, Bereitstellen der Identitätskarte mit einer Lichtquelle zum Emittieren von Licht auf die erste Anordnung von Licht-reflektierenden Elementen, und die zweite Anordnung von Licht-reflektierenden Elementen, und Bereitstellen der Identitätskarte mit einem optischen Sensor zum Erfassen von Licht, welches von der ersten Anordnung von Licht-reflektierenden Elementen und der zweiten Anordnung von Licht-reflektierenden Elementen in dem Kartenkörper reflektiert wurde.

## Revendications

1. Carte d'identité, comprenant:

un corps de carte (101, 121);
une fonction physique non clonable (103, 123) agencée dans le corps de carte (101, 121), dans lequel la fonction physique non clonable (103, 123) comprend un premier agencement d'éléments réfléchissant la lumière (105, 125) qui est disposé dans une première zone du corps de carte (107, 127) et un second agencement d'éléments réfléchissant la lumière (109, 129) qui est disposé dans une seconde zone du corps de carte (111, 131), et dans lequel le premier agencement d'éléments réfléchissant la lumière (105, 125) a une réflectivité optique supérieure à celle du second agencement d'éléments réfléchissant la lumière (109, 129);
**caractérisée en ce que** la carte d'identité comprend en outre:

une source de lumière (211) destinée à émettre de la lumière vers le premier agencement d'éléments réfléchissant la lumière (105, 125) et le second agencement d'éléments réfléchissant la lumière (109, 129); et
un capteur optique (213) destiné à détecter la lumière réfléchie par le premier agencement d'éléments réfléchissant la lumière (105, 125) et le second agencement d'éléments réfléchissant la lumière (109, 129).

2. Carte d'identité selon la revendication 1, dans lequel le second agencement d'éléments réfléchissant la lumière (109, 129) est disposé plus près d'au moins un point commun (135) sur une surface (113, 133) du corps de carte (101, 121) ou dans le corps de carte (101, 121) que le premier agencement d'éléments réfléchissant la lumière (105, 125).

3. Carte d'identité selon la revendication 1 ou 2, ne comprenant que N agencements (103, 123) d'éléments réfléchissant la lumière, chacun des N agencements (103, 123) d'éléments réfléchissant la lumière étant disposé dans une zone différente du corps de carte à une distance différente d'un point commun (135) sur une surface (113, 133) du corps de carte (101, 121) ou dans le corps de carte (101, 121), et dans lequel une réflectivité optique des agencements (103, 123) d'éléments réfléchissant la lumière augmente, notamment linéairement ou progressivement, pour une distance croissante des agencements (103, 123) d'éléments réfléchissant la lumière par rapport au point commun (133).

4. Carte d'identité selon l'une quelconque des revendications précédentes, dans lequel les éléments réfléchissant la lumière de l'agencement respectif (105, 109, 125, 129) d'éléments réfléchissant la lumière sont respectivement formés par des particules rétrodiffusantes ou réfléchissantes qui sont disposées de manière à former l'agencement respectif d'éléments réfléchissant la lumière (105, 109, 125, 129), ou par des éléments de surface plans, notamment des bandes ou des rectangles ou des éléments circulaires ou des éléments ovales, qui sont disposés de manière à former l'agencement respectif d'éléments réfléchissant la lumière (105, 109, 125, 129).

5. Carte d'identité selon l'une quelconque des revendications précédentes, dans lequel une densité spatiale des éléments réfléchissant la lumière du premier agencement (105, 125) d'éléments réfléchissant la lumière dans la première zone du corps de carte (107, 127) est supérieure à une densité des éléments réfléchissant la lumière du second agencement (109, 129) d'éléments réfléchissant la lumière dans la seconde zone du corps de carte (111, 131).

6. Carte d'identité selon l'une quelconque des revendications précédentes, dans lequel les éléments réfléchissant la lumière du premier agencement (105, 125) d'éléments réfléchissant la lumière ont des surfaces réfléchissantes plus grandes que les éléments réfléchissant la lumière du second agencement (109, 129) d'éléments réfléchissant la lumière.

7. Carte d'identité selon l'une quelconque des revendications précédentes, dans lequel les intensités de la lumière réfléchie par le premier agencement (105, 125) d'éléments réfléchissant la lumière et le second agencement (109, 129) d'éléments réfléchissant la lumière en un point commun sur une surface du corps de carte sont identiques dans une gamme d'identités.

8. Carte d'identité selon l'une quelconque des revendications précédentes, dans lequel les éléments réfléchissant la lumière de l'agencement respectif (105, 109, 125, 129) d'éléments réfléchissant la lumière sont statistiquement ou régulièrement disposés dans la zone respective du corps de carte.

9. Carte d'identité selon l'une quelconque des revendications précédentes, dans lequel les éléments réfléchissant la lumière du premier (105, 125) agencement d'éléments réfléchissant la lumière et du second agencement (109, 129) d'éléments réfléchissant la lumière forment respectivement des couches réfléchissantes.

10. Carte d'identité selon la revendication 9, dans lequel les couches réfléchissantes sont des couches réfléchissantes planes disposées à des distances différentes par rapport à une surface du corps de carte, ou dans lequel les couches réfléchissantes sont disposées le long de courbures, notamment de courbures sphériques, avec des rayons différents vers un point central commun, le point central commun étant un point commun (133) sur une surface du corps de carte (113, 133) ou étant au-dessus ou en dessous de la surface du corps de carte ou dans le corps de carte (101, 121).

11. Carte d'identité selon l'une quelconque des revendications précédentes, dans lequel les éléments réfléchissant la lumière de l'agencement respectif d'éléments réfléchissant la lumière (105, 109, 125, 12g) sont respectivement disposés de manière à former un motif périodique, notamment un réseau.

12. Carte d'identité selon l'une quelconque des revendications précédentes, dans lequel une différence entre la réflectivité du premier agencement d'éléments réfléchissant la lumière (105, 125) et du second agencement (109, 129) d'éléments réfléchissant la lumière est supérieure ou égale à un seuil prédéterminé.

13. Carte d'identité selon l'une quelconque des revendications précédentes, dans lequel le corps de carte (101, 121) est transparent et dans lequel la zone respective du corps de carte forme une couche du corps de carte, notamment une couche stratifiée.

14. Procédé de fabrication d'une carte d'identité, le procédé consistant à:

agencer un premier agencement d'éléments réfléchissant la lumière dans une première zone du corps de carte d'un corps de carte et un second agencement d'éléments réfléchissant la lumière dans une seconde zone de corps de carte du corps de carte, le premier agencement d'éléments réfléchissant la lumière ayant une réflectivité optique supérieure à celle du second agencement d'éléments réfléchissant la lumière, les agencements d'éléments réfléchissant la lumière formant une fonction physique non clonable, munir la carte d'identité d'une source destinée à émettre de la lumière vers le premier agencement d'éléments réfléchissant la lumière et le second agencement d'éléments réfléchissant la lumière, et munir la carte d'identité d'un capteur optique destiné à détecter la lumière réfléchie par le premier agencement d'éléments réfléchissant la lumière et le second agencement d'éléments réfléchissant la lumière dans le corps de carte.

Fig. 1a

Fig. 1b

Fig. 2

Fig. 3a

Fig. 3b

nay sense the reflected light.

\ccording to an embodiment, the first arrangement of light reflecting elements a second arrangement of light reflecting elements jointly form an optical lens.

\ccording to an embodiment, the card body is transparent and wherein the res[ )ody area forms a layer of the card body, in particular a laminate layer.

\ccording to an embodiment, the identity card further comprises a light source f ight towards the first arrangement of light reflecting elements and the second a1 ight reflecting elements, and an optical sensor for sensing light reflected from tH irrangement of light reflecting elements and the second arrangement of light ret :lements.

\ccording to an embodiment, the first arrangement of light reflecting elements a second arrangement of light reflecting elements have light transmittances which han a light transmittance of the card body. The first arrangement of light reflecti ind the second arrangement of light reflecting elements can be e.g. refractive l; liffractive layers and/or reflective layers and/or reflective layers and/or at least [ )paque layers. Thereby, an optical fingerprint of the identity card can be obtain(

\ccording to an embodiment, the respective light transmittance layer is an optic ayer or an optically nonlinear or optically excited layer.

\ccording to an embodiment, the optically linear layer is one of the following lay ayer or a printing ink layer or a nanoparticle layer or a layer having a light refrac

Fig. 4b

Fig. 5

Fig. 6a

Fig. 6b

Fig. 6c

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0778159 A1

**Non-patent literature cited in the description**

- Extracting secret keys from integrated circuits. **LIM, DAIHYUN ; LEE, JAE W ; GASSEND, BLAISE ; SUH, G. EDWARD ; VAN DIJK, MARTEN ; DEVADAS, SRINIVAS.** IEEE Transactions on Very Large Scale Integration (VLSI) Systems. IEEE, 2005, vol. 13, 1200-1205

- **THOMAS ESBACH ; WALTER FUMY ; OLGA KULIKOVSKA ; DOMINIK MERLI ; DIETER SCHUSTER ; FREDERIC STUMPF.** A new security architecture for smartcards utilising PUFs. *Securing Electronic Business Processes - Highlights of the Information Security Solutions Europe 2012 Conference,* 2012